Europäisches Patentamt

European Patent Office

Office européen des brevets

(19)

(11) Numéro de publication: **0 110 903**
**B1**

(12) ## FASCICULE DE BREVET EUROPEEN

(45) Date de publication du fascicule du brevet:
**08.10.86**

(21) Numéro de dépôt: **83901575.7**

(22) Date de dépôt: **25.05.83**

(86) Numéro de dépôt international:
**PCT/CH 83/00068**

(87) Numéro de publication internationale:
**WO 83/04302 (08.12.83** Gazette 83/28)

(51) Int. Cl.⁴: **G 01 B 5/20,** G 01 B 5/24,
G 01 B 21/22, G 01 B 5/08,
B 25 J 19/00

(54) **DISPOSITIF DE MANIPULATION D'UNE PIECE CYLINDRIQUE OU SPHERIQUE.**

(30) Priorité: **03.06.82 CH 3399/82**

(43) Date de publication de la demande:
**20.06.84 Bulletin 84/25**

(45) Mention de la délivrance du brevet:
**08.10.86 Bulletin 86/41**

(84) Etats contractants désignés:
**DE FR GB SE**

(56) Documents cités:
**CH - A - 436 741**
**DE - B - 1 941 051**
**US - A - 1 401 119**
**US - A - 2 303 007**
**US - A - 3 315 367**

(73) Titulaire: **MESELTRON S.A., Avenue Beauregard 14/18,
CH-2035 Corcelles (CH)**

(72) Inventeur: **SIGG, Hans, Charmettes 15,
CH-2006 Neuchatel (CH)**

(74) Mandataire: **Barbeaux, Bernard et al, SMH Société
Suisse de Microélectronique et d'Horlogerie S.A.
Département Brevets et Licences 6, Faubourg du Lac,
CH-2501 Bienne (CH)**

ACTORUM AG

## Description

La présente invention concerne un dispositif de manipulation d'une pièce cylindrique ou sphérique, pouvant constituer par exemple la pince de serrage d'un automate programmable ou robot. Ce dispositif est muni de moyens simples permettant de mesurer le diamètre de la pièce transportée pendant sa manipulation.

Dans de très nombreux processus de fabrication industrielle, des robots sont mis en oeuvre pour assurer la manipulation de pièces en vue de leur usinage ou de leur assemblage par exemple. Pour vérifier la présence des pièces, les compter, contrôler leur état et éventuellement régler le processus de fabrication en conséquence, il est apparu très intéressant d'intégrer des moyens de mesures de pièces au dispositif de manipulation lui-même.

Bien entendu, de nombreux robots sont munis de capteurs disposés le plus souvent au niveau des articulations des éléments du bras destiné à saisir la pièce, qui permettent de connaître la position de ces éléments. Toutefois, la précision limitée de ces capteurs et le défaut de rigidité des éléments constituant le bras, notamment lorsque le robot est chargé de manipuler des pièces lourdes pouvant atteindre une vingtaine de kilogrammes, ne permettent pas d'effectuer des mesures avec la précision requise, qui est de l'ordre de quelques micromètres.

C'est pourquoi, la présente invention se propose d'intégrer au dispositif de manipulation des moyens de mesure de construction simple, et particulièrement bien adaptés pour assurer une mesure rapide, fiable et précise des diamètres des pièces transportées.

A cet effet, le dispositif de manutention selon la revendication 1, comportant deux bras entre lesquels la pièce doit être saisie, présente dans l'un au moins de ces bras un dièdre ou un trièdre dans lequel la pièce est susceptible de s'engager, selon qu'elle est cylindrique ou sphérique. Un capteur de longueur est monté sur l'arête du dièdre, ou au sommet du trièdre, pour déterminer la distance de la surface de la pièce à l'arête ou au sommet, cette distance étant représentative du diamètre de la pièce.

Le principe de fonctionnement de tels moyens de mesure, dans lesquels la position d'une pièce cylindrique placée dans une gorge en V par rapport à l'arête de ce V permet de déduire le diamètre de la pièce, est connu en soi. Il est décrit par exemple dans l'ouvrage «Taschenbuch der Längenmesstechnik», Springer Verlag, Berlin, 1954, p. 466 et 467, et ne sera donc pas davantage explicité dans ce qui suit. L'idée inventive consiste en réalité à avoir reconnu que la structure particulière de tels moyens de mesure leur permettait d'être utilisés non seulement pour contrôler les dimensions d'une pièce, mais également pour la saisir.

L'invention sera bien comprise à la lecture de la description suivante faite en référence aux dessins joints, parmi lesquels:

la fig. 1 est une vue en coupe d'un dispositif selon un premier mode de réalisation de l'invention, et

les fig. 2 et 3 représentent en perspective deux autres modes de réalisation de l'invention.

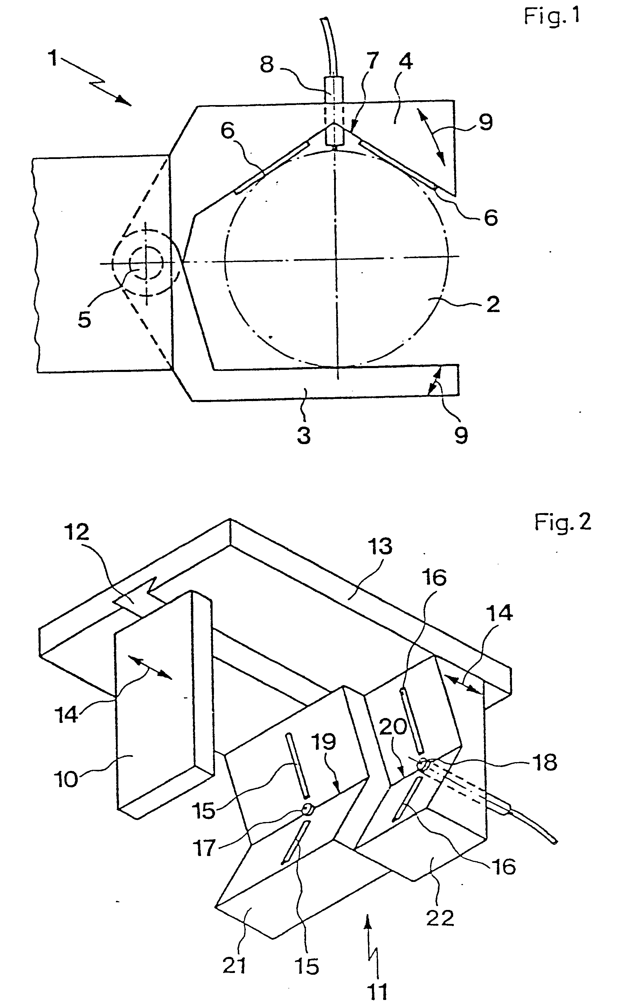

Comme on le voit au mieux dans la fig. 1, le dispositif de manipulation 1 prévu pour saisir une pièce cylindrique 2 comporte au moins deux bras 3 et 4 articulés en 5 de manière à pouvoir saisir et retenir la pièce 2 entre ces deux bras. Dans le bras 4 est formé une gorge en V dans laquelle sont montées deux ou trois barrettes 6 de façon à former les arêtes d'un dièdre contre lesquelles peut venir s'appuyer une pièce cylindrique retenue par l'arrière pour le bras 3. Les barrettes 6 sont réalisées dans une matière résistant à l'usure, comme par exemple en métal dur, en saphir ou encore en diamant polycristallin. Au sommet 7 du dièdre est monté un capteur de mesure de longueur 8 permettant de détecter la position de la surface en regard de la pièce 2.

Le type du capteur utilisé est sans importance. Il peut s'agir par exemple d'un capteur inductif, capacitif, résistif, pneumatique ou optique, et la mesure peut soit nécessiter un contact entre l'extrémité du capteur et la pièce, soit s'en dispenser.

L'angle formé par le dièdre est quelconque, mais de cet angle dépend la relation entre le diamètre de la pièce 2 et les indications du capteur 8. En choisissant pour cet angle la valeur, connue, de 112° 53′ 12″ environ, le rapport des variations de diamètre pour deux pièces données sur le déplacement correspondant du capteur de mesure est égal à 10, ce qui permet un étalonnage simple des moyens de mesure. Les flèches 9 de la fig. 1 indiquent les mouvements suivis par les deux bras du dispositif pour saisir ou libérer la pièce 2. Pour assurer la stabilité de cette dernière il suffira que le bras 3 se trouve placé en face de la zone d'appui de la pièce sur les barrettes 6 du bras 4.

La fig. 1 montre très clairement l'un des avantages essentiels de l'invention. Dans la position représentée, le poids de la pièce 2, qui peut être important, ne risque de provoquer aucune déformation du bras supérieur 4, et n'exerce donc aucune influence défavorable sur la précision de la mesure, contrairement à ce qui se produirait si l'on utilisait des capteurs de position des bras 3 et 4 montés au niveau de l'articulation 5.

Dans la fig. 2 on a représenté un autre mode de réalisation du dispositif de manutention, dans lequel les bras 10 et 11 sont mobiles en translation dans la rainure 12 d'un support commun 13 dans la direction des flèches 14. Le bras 11 est muni d'une première paire de barrettes concourantes 15 et d'une deuxième paire de barrettes concourantes 16. Chaque paire de barrettes forme un dièdre particulier au sommet duquel est placé un palpeur de mesure de longueur distinct 17, 18. Cette disposition permet par exemple de mesurer le diamètre d'une pièce cylindrique en deux endroits différents, par exemple, pour en mesurer la conicité. S'il s'agit de mesurer deux diamètres de valeur différente de la pièce, les arêtes 19 et 20 des dièdres formés par les paires de barrettes 15 et 16 respectivement sont décalées perpendiculairement à l'axe de la pièce à mesurer. Afin de faciliter l'adaptation du dispositif à la manipulation de pièces de formes variées, le bras 11 est constitué de deux portions 21, 22 portant chacune une paire de barrettes et dont la position relative peut être réglée dans une direction perpendiculaire à l'axe de la pièce à saisir.

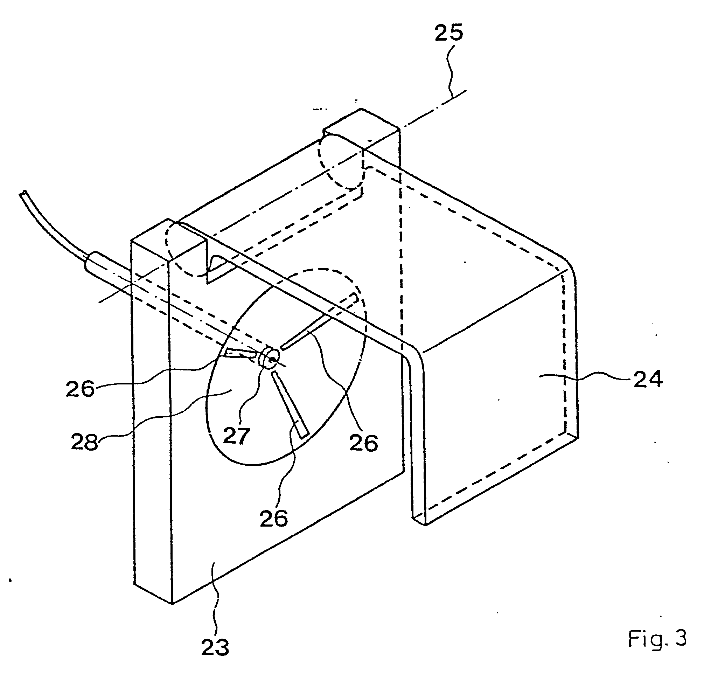

Dans la fig. 3, on a représenté un troisième mode de réalisation de l'invention, prévu pour la manipulation de pièces sphériques. Dans ce cas, le dispositif comprend par exemple deux bras 23, 24 articulés l'un par rapport à l'autre en rotation autour de l'axe 25. Le bras 23 comporte une dépression 28 dans laquelle sont montées trois barrettes 26 de façon à former les arêtes d'un tièdre, contre lesquelles peut venir s'appuyer une pièce sphérique retenue par l'arrière par le bras 24. Au sommet du tièdre, ou de la pyramide formée par les directions des barrettes 26, est placé, comme précédemment, un capteur de mesure 27 dont les indications permettent de déterminer le diamètre de la pièce, compte tenu de l'angle au sommet de la pyramide.

Bien qu'elle ait été décrite en relation avec certains de ses modes de réalisation seulement, l'invention est susceptible de faire l'objet de nombreuses modifications et variantes qui apparaîtront à l'homme du métier dans le cadre des revendications.

**Revendications**

1. Dispositif de manipulation d'une pièce cylindrique, respectivement sphérique, muni de moyens de mesure de son diamètre, comportant deux bras prévus pour saisir ladite pièce, caractérisé en ce que dans l'un au moins desdits bras est formé un dièdre, respectivement un trièdre, dans lequel la pièce est susceptible de s'engager, et en ce qu'un capteur de mesure de longueur est monté sur l'arête du dièdre, respectivement au sommet du trièdre, pour déterminer la distance de la surface de la pièce à ladite arête, respectivement audit sommet, cette distance étant représentative du diamètre de la pièce.

2. Dispositif selon la revendication 1, caractérisé en ce que le dièdre est formé par des barrettes concourantes deux à deux réalisées dans un matériau résistant à l'usure.

3. Dispositif selon la revendication 2, caractérisé en ce qu'un premier capteur de mesure de longueur est monté à l'intersection des directions d'une première paire de barrettes concourantes et un deuxième capteur de mesure de longueur est monté à l'intersection des directions d'une deuxième paire de barrettes concourantes.

4. Dispositif selon la revendication 3, pour la mesure de deux diamètres différents d'une pièce cylindrique, caractérisé en ce que les intersections des directions de la première et de la deuxième paires de barrettes sont décalées dans une direction perpendiculaire à l'axe de la pièce à mesurer.

5. Dispositif selon la revendication 3 ou la revendication 4, caractérisé en ce que les positions des deux paires de barrettes sont réglables l'une par rapport à l'autre dans une direction perpendiculaire à l'axe de la pièce à mesurer, de manière à pouvoir assurer la manipulation de pièces de formes variées.

6. Dispositif selon l'une des revendications 1 à 5, caractérisé en ce que l'angle dudit dièdre est d'environ 112° 53′ 12″.

7. Dispositif selon la revendication 1, caractérisé en ce que ledit trièdre est formé par trois barettes réalisées dans un matériau résistant à l'usure et qui s'étendent selon des directions des arêtes d'une pyramide.

**Patentansprüche**

1. Vorrichtung für die Manipulation eines zylindrischen beziehungsweise kugeligen Teils, versehen mit Mitteln zur Messung von dessen Durchmesser, umfassend zwei Arme zum Erfassen des genannten Teils, dadurch gekennzeichnet, dass in mindestens einem der genannten Arme ein Dieder beziehungsweise ein Trieder ausgebildet ist, in dem sich das Teil einbetten kann und dass ein Längenmessfühler in dem First des Dieders beziehungsweise in der Spitze des Trieders zum Bestimmen des Abstandes der Oberfläche des Teils von dem genannten First bzw. der genannten Spitze montiert ist, welcher Abstand repräsentativ für den Durchmesser des Teils ist.

2. Vorrichtung nach Anspruch 1, dadurch gekennzeichnet, dass der Dieder von jeweils zu zweit zusammenwirkenden Platten gebildet wird, die aus einem verschleissresistenten Material gefertigt sind.

3. Vorrichtung nach Anspruch 2, dadurch gekennzeichnet, dass ein erster Längenmessfühler in der Schnittlinie der Richtungen eines ersten Paares zusammenwirkender Platten angeordnet und ein zweiter Längenmessfühler in der Schnittlinie der Richtungen eines zweiten Paares zusammenwirkender Platten angeordnet ist.

4. Vorrichtung nach Anspruch 3, für die Messung von zwei unterschiedlichen Durchmessern eines zylindrischen Teils, dadurch gekennzeichnet, dass die Schnittlinien der Richtungen des ersten und des zweiten Paares von Platten in einer Richtung senkrecht zur Achse des zu messenden Teils versetzt sind.

5. Vorrichtung nach Anspruch 3 oder 4, dadurch gekennzeichnet, dass die Positionen der beiden Paare von Platten relativ zueinander einstellbar sind in einer Richtung senkrecht zur Achse des zu messenden Teils, derart, dass die Manipulation von Teilen unterschiedlicher Formen ermöglicht wird.

6. Vorrichtung nach einem der Ansprüche 1 bis 5, dadurch gekennzeichnet, dass der Winkel des Dieders etwa 112° 53′ 12″ beträgt.

7. Vorrichtung nach Anspruch 1, dadurch gekennzeichnet, dass der genannte Trieder von drei aus einem verschleissresistenten Material gefertigten Platten gebildet ist, die sich in den Richtungen der Seiten einer Pyramide erstrecken.

**Claims**

1. Apparatus for manipulating a cylindrical, respectively a spherical object, provided with means for measuring the diameter thereof including two arms provided for grasping said object, characterized in that in at least one of said arms there is formed a dihedron, respectively a trihedron, in which the object may be engaged and in that a detector for length measurement is mounted on the groin of the dihedron, respectively at the summit of the trihedron, in order to determine the distance from the surface of the object to said groin, respectively said summit, said distance being representative of the diameter of the object.

2. Apparatus according to claim 1, characterized in that said dihedron is formed by converging pairs of bars fashioned from wear resistant material.

3. Apparatus according to claim 2, characterized in that a first detector for length measurement is mounted at the intersection of the directions of a first pair of converging bars and a second detector for length measurement is mounted at the intersection of the directions of a second pair of converging bars.

4. Apparatus according to claim 3 for measuring two different diameters of a cylindrical object, characterized in that the intersection of the directions of the first and the second pairs of bars are staggered in a direction perpendicular to the axis of the object to be measured.

5. Apparatus according to claim 3 or claim 4, characterized in that the positions of the two pairs of bars are adjustable relative to one another in a direction perpendicular to the axis of the object to be measured so as to be capable of assuring the manipulation of objects of varied forms.

6. Apparatus according to any of claims 1 to 5, characterized in that the angle of said dihedron is about 112° 53' 12".

7. Apparatus according to claim 1, characterized in that said trihedron is formed by three bars fashioned from a wear resistant material and which extend according to the directions of the ridges of a pyramid.

Fig.1

Fig.2

Fig. 3